**Europäisches Patentamt**

**European Patent Office**

**Office européen des brevets**

(19)

(11) Veröffentlichungsnummer : **0 158 743**
**B1**

(12) **EUROPÄISCHE PATENTSCHRIFT**

(45) Veröffentlichungstag der Patentschrift :
27.07.88

(51) Int. Cl.⁴ : **G 21 F   9/00**

(21) Anmeldenummer : **84116440.3**

(22) Anmeldetag : **28.12.84**

(54) Verfahren und Vorrichtung zum Reinigen radioaktiv verseuchter Anlagenteile.

(30) Priorität : **26.01.84 DE 3402702**

(43) Veröffentlichungstag der Anmeldung :
**23.10.85 Patentblatt 85/43**

(45) Bekanntmachung des Hinweises auf die Patenterteilung : **27.07.88 Patentblatt 88/30**

(84) Benannte Vertragsstaaten :
**AT BE CH DE FR GB IT LI LU NL SE**

(56) Entgegenhaltungen :
**EP-A- 0 018 152**
**FR-A- 2 127 021**
**FR-A- 2 209 179**

(73) Patentinhaber : **Ernst Schmutz GmbH**
**Römerstrasse 16**
**D-7858 Weil am Rhein (DE)**

(72) Erfinder : **Mierswa, Christian**
**Baselstrasse 20**
**D-7851 Binzen (DE)**
Erfinder : **Schmutz, Friedrich**
**Riehener Strasse 40**
**D-7858 Weil am Rhein (DE)**

(74) Vertreter : **Lorenz, Eduard**
**Rechtsanwälte Eduard Lorenz - Bernhard Seidler**
**Margrit Seidler - Dipl.-Ing. Hans-K. Gossel Dr. Ina**
**Philipps - Dr. Paul B. Schäuble Dr. Siegfried Jacker-**
**meier**
**Widenmayerstrasse 23 D-8000 München 22 (DE)**

**Beschreibung**

Die Erfindung betrifft ein Verfahren zum Reinigen radioaktiv verseuchter Teile von Kernkraftwerksanlagen und eine Vorrichtung zur Durchführung dieses Verfahrens.

Sämtliche Teile eines Kernkraftwerks oder anderer kerntechnischer Anlagen, die mit radioaktiven Substanzen in Berührung gekommen sind, müssen nach der Demontage vor ihrer Einlagerung in Deponien oder Wiederverwendung beispielsweise als Schrott dekontaminiert werden, wenn sie nicht insgesamt für radioaktiv verseuchte Stoffe geeigneten Endlagerungen zugeführt werden sollen was jedoch wegen der damit verbundenen hohen Kosten vermieden werden soll. Gegenwärtig kostet die Entsorgung eines 100-Liter-Fasses mit radioaktiv verseuchten Stoffen etwa DM 5.000, --. Aus diesem Grunde muß die menge der zu entsorgenden radioaktiv verseuchten Substanzen möglichst gering gehalten werden.

Es ist bekannt, die demontierten radioaktiv verseuchten Anlagenteile mit Chemikalien und Wasser zu reinigen, was jedoch ein sehr kostspieliges Verfahren ist, weil das mit den Chemikalien gemischte Wasser und die anfallenden Feststoffe restlos entsorgt werden müssen. Weiterhin kann die Dekontamination mit Chemikalien und Wasser nicht an Ort und Stelle bei den Kraftwerken vorgenommen werden, sondern nur in besonderen fabrikmäßigen Anlagen, zu denen die zu entsorgenden bzw. zu reinigenden Teile in sicherer Weise transportiert werden müssen, so daß neben dem aufwendigen Verfahren noch hohe Kosten für Sondertransporte entstehen.

Weiterhin ist es bekannt, radioktiv verseuchte Teile mechanisch zu reinigen, beispielsweise durch Abschmirgeln mit Schleifscheiben oder dergleichen. Dieses Verfahren ist besonders arbeitsaufwendig und für die ausführende Person mit einer erheblichen Belastung verbunden.

Aus der EP-A-18 152 ist ein Verfahren nach dem Oberbegriff des Anspruchs 1 bekannt. Dabei werden die zu reinigenden Teile mit einem ein körniges Schleifmittel enthaltenden Druckwasserstrahl bestrahlt und wird das abfliessende Gemisch aus Wasser, Schleifmittel und abgetragenen Oberflächenpartikeln in eine Wasserphase und eine Schlammphase getrennt.

Aus der FR-A-2 209 179 ist es bekannt, ein körniges Schleifmittel nach Gebrauch wieder zu verwenden.

Aufgabe der Erfindung ist es daher, ein Verfahren zum Reinigen radioaktiv verseuchter Anlagenteile zu schaffen, welches mit vertretbarem Kostenaufwand einfach durchzuführen ist.

Diese Aufgabe wird gemäß der Erfindung durch die kennzeichnenden Merkmale des Anspruchs 1 gelöst. Das abrasive Abtragen von Oberflächenschichten mit einem ein Schleifmittel enthaltenden Druckwasserstrahl ist an sich bekannt. Dieses Verfahren wird jedoch zur Reinigung radioaktiv kontaminierter Anlagenteile nur selten verwendet, weil eine große Menge von abgetragenen Partikeln und vermischtem Schleifmittel anfällt, welches mit großem Kostenaufwand als leicht radioaktiver Abfall entsorgt werden muß. In der Stunde fallen etwa 500 kg derartigen Abfall an, dessen Entsorgung gegenwärtig Kosten in Höhe von etwa DM 10 000, -- verursacht.

Erfindungsgemäß wird nun zum Reinigen der radioaktiv verseuchten Anlagenteile das an sich bekannte Strahlverfahren benutzt, dessen Durchführung wirtschaftlich vertretbar ist, weil das wiedergewonnene gereinigte Schleif- oder Strahlmittel wiedeverwendet wird, ohne daß es mit hohem Kostenaufwand als radioaktiver Abfall entsorgt werden müßte. Zum Strahlen wird voll entsalztes Wasser verwendet, dessen Entsorgung keine Probleme bereitet, da es verdampft werden kann.

Der beim Trocknen entstehende Wasserdampf kann, wenn er genügend rein ist, in die Atmosphäre geleitet oder kondensiert und in die Wasserphase geführt werden, die in besonderen Verdampfungsanlagen zu ihrer Reinigung verdampft und eventuell anschliessend wieder kondensiert wird.

Vor der Trennung des Wasser-Schleifmittel-Partikel-Gemisches kann das grobkörnigere Schleifmittel abgetrennt werden. Das Gemisch kann auch durch Sedimentieren getrennt werden.

Die nach dem Trockenen in der Schlammphase zurückbleibenden Feststoffe können durch Sieben in Schleifmittel eventuell unterschiedlicher Körnung und in zu entsorgende gestrahlte Oberflächenpartikel der Anlagenteile mit unter der Schleifmittelkörung liegender Körnung getrennt werden. Diese Trennung ist relativ einfach vorzunehmen, da die Körnung der abgestrahlten Oberflächenpartikel der Anlagenteile kleiner ist als die Schleifmittelkörnung. Natürlich werden bei dieser Trennung auch zerstörte Schleifmittelkörner mit abgetrennt und der zu entsorgenden Masse zugeschlagen.

Es ist auch möglich, nur die aufgrund der Grobtrennung gewonnenen Teilchen in ein wiederverwendbares Schleif- oder Strahlmittel und zu entsorgende Oberflächenpartikel, die mit zerstörten Schleifmittelkörnern durchsetzt sind, zu trennen und den Schlamm, der Partikel mit unter der Körnung des Schleifmittels liegender Körnung enthält, zu entsorgen.

Eine Vorrichtung zur Durchführung des erfindungsgemäßen Verfahrens besteht aus zwei voneinander getrennten geschlossenen Kammern, von denen in der einen die aus einem Rost bestehende Arbeitsbühne und ein Schlammauffangbecken und in der anderen die Einrichtungen zum Trennen des Schlammes in Wasser und Feststoffe angeordnet sind. Die Kammern sind mit den erforderlichen Anschlüssen versehen und weisen zweckmäßigerweise ein Edelstahlgehäuse auf. Sie können in den Abmessungen von «ISO-NORM-CONTAINERN» hergestellt werden, so daß sie in einfacher Weise zu unterschiedlichen Einsatzorten transportiert werden können.

Üblicherweise werden die Container bei zu entsorgenden Kernkraftwerken aufgestellt, so daß das Abwasser in den werkseigenen Abwasserkreislauf eingespeist werden kann.

Als Schleif- oder Strahlmittel können Korund-, Glas- oder Edelstahlkörner verwendet werden, wobei die Körnungen vorzugsweise in Bereich von 0,6 bis 1,2 liegen.

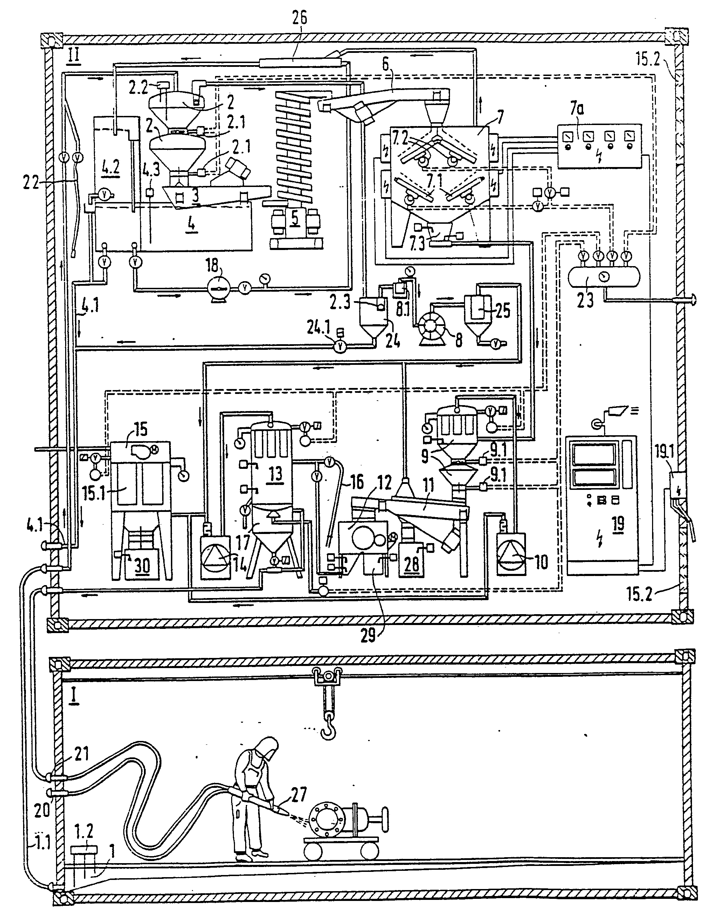

Ein Ausführungsbeispiel der Erfindung wird nachstehend anhand der Zeichnung, in deren einziger Figur der den Arbeitsraum enthaltende Dekontaminationscontainer I under Recyclingcontainer II, welcher die der Reinigung dienenden Einrichtungen enthält, schematisch dargestellt ist, näher erläutert.

Die eine geschlossene Kammer einschliessenden Container I, II weisen Wandungen aus Edelstahl auf, die mit einem Stahlprofilrahmen verbunden sind, der aus Bodenlängs und- querträgern, Türecksäulen, Stirnecksäulen und Dachlangträgern aus Spezial-Kaltwalzstahlprofilen hergestellt ist. Jeder container ist mit einer nicht dargestellten Tür sowie den erforderlichen Luftansaug- und Ausblasöffnungen sowie nach außen führenden Rohrleitungsstutzen versehen. Alle Schweißnähe sind glatt geschliffen und porenfrei nachgearbeitet und poliert.

Der Dekontaminationscontainer I enthält den Arbeitsraum. Er ist mit einer rostartigen Bühne versehen, unter der ein Schlammsammler 1 angeordnet ist, in welchem das Wasser-Schleifmittel-Oberflächenpartikel-Gemisch aufgefangen wird. Der Dekontaminationscontainer I ist mit einem Anschlußstutzen 20 zur Hochdruckwasserversorgung, einem Anschlußstutzen 21 zur Strahlmittellversorgung und einem nicht dargestellten Druckluftanschlußstutzen versehen. Der Schlammsammler 1 ist über einen Anschlußstutzen mit der Schlauchleitung 1.1 verbunden. Die mit der Hochdruckwasserversorgung 20 und mit der Strahlmittelversorgung 21 verbundenen Schläuche führen zu einer Feuchtstrahldüse 27 üblicher Bauart.

Das in dem Schlammsammler 1 gesammelte Schlamm-Wassergemisch, bestehend aus dem Strahlmittel (Korund, Edelstahlkorn, Drahtkorn), Strahlgutabrieb (Farbreste, Metallteilchen etc.) und Wasser, wird über eine zwischen beiden Containern I, II angeordnete flexible Schlauchleitung 1.1 in den Recyclingcontainer II gesaugt. Das Zu- und Abschalten der Förderung erfolgt automatisch über einen Füllstandsgrenzmelder 1.2, in Abhängigkeit des Minimum-, Maximum- und Grenzwertes des Füllstandes im Schlammsammler 1.

Das Schlamm-Strahlmittel-Wassergemisch wird innerhalb des Recyclingcontainers II zunächst in zwei Vakuumbirnen 2 gefördert, welche in Doppelkammerbauweise ausgeführt und über zwei elektropneumatisch angetriebene Drehklappen 2.1 zeittaktgesteuert sind, und anschließend auf eine darunter angeordnete Vibrations-Entwässerungs-Siebanlage 3 ausgeschleust. Auf dieser Entwässerungs-Siebanlage 3 findet die Trennung der beiden Feststoff- und Flüssigkeits-Medienströme statt. Während die Flüssigkeit in die unterhalb angeordnete Wassersammelwanne 4 abläuft, wird das Feststoffgemisch zum Auslauf der Vibrations-Entwässerungs-Siebanlage 3 gefördert. Um ein unkontrolliertes Überströmen von Flüssigkeiten aus den Vakuumbirnen 2 in die Vakuumpumpe 8 zu verhindern, sind neben einer elektrischen Füllstandsüberwachung 2.2 auch noch zwei mechanisch arbeitende Flüssigkeitsabscheider mit Schwimmerschaltern 2.3 und 24 vorgesehen.

Eine Entleerung des Flüssigkeitsabscheiders 24 erfolgt automatisch über ein Entleerungsventil 24.1. Das Aufsaugen von Rückständen aus dem Recyclingcontainer II ist mittels einer Sauggarnitur 22 manuell möglich. Zum Schutz der Vakuumpumpe 8 vor Staubeintritt ist dieser ein Filter 8.1 vorgeschaltet. Ein Ölnebelabscheider 25 unterbindet den Übertritt von Ölnebeln in das nachgeschaltete Entstaubungssystem 15.

Entsorgungskreislauf/Strahlmittelaufbereitung (Feststoffkreislauf)

Der Weitertransport des stark vorentwässerten Feststoffgemisches auf der Vibrations-Entwässerungs-Siebanlage 3 erfolgt über einen Vibrations-Wendel-förderer 5 auf eine Vibrations-Förderrinne 6 und von dieser in den Trockner 7. Dieser Trockner 7 ist ein elektrisch beheizter Kaskadentrockner mit vier drehbar und elastisch angeordneten Aluminiumheizplatten 7.1, die über zeitabhängig gesteuerte Kugelvibratoren 7.2 erregt werden. Die Temperatur jeder Aluminiumheizplatte 7.1 wird einzeln lastabhängig über einen Schalt- und Regelschrank 7 a geregelt. Das nach unten rieselnde Feststoffgemisch wird nun aus dem Ansaugtrichter 7.3 über eine Vakuumpumpe 10 pneumatisch in den Materialsammler des Saugfördergerätes 9 gesaugt und kontinuierlich über eine pneumatisch betätigte Zwei-Kammer-Drehklappenschleuse 9.1 auf eine Vibrationssiebanlage 11 geleitet. Auf der Vibrationssiebanlage 11 erfolgt die mechanische Trennung in nicht mehr verwendbares Unterkorn und wiederverwendbares Nutzkorn. Während das Unterkorn in dem Unterkornsammler 28 gesammelt wird, wird das wiederverwendbare Strahlmittel über einen Magnetabscheider 12 geleitet, wo eine Selektion in magnetische und unmagnetische Bestandteile erfolgt. Während die magnetischen Rückstände in dem Magnetsammler 29 gesammelt werden, erfolgt der Weitertransport des Nutzkorns über die Vakuumpumpe 14 in den Abscheidebehälter des Vakuum-Saugfördergerätes 13. Die Größe des Abscheidebehälters ist so bemessen, daß eine Bevorratung und Pufferung des Strahlmittels für den Strahlprozess vorgenommen werden kann. Das Einschleusen des Strahlmittels in den darunter angeordneten Strahlmittelkessel 17 geschieht automatisch nach Unterbrechung des Strahlvorganges durch den Bedienungsmann im Dekontaminationscontainer I. Das Nachfüllen von Strahlmittel in den Kreislauf erfolgt manuell durch eine Mittelbefüllung-Sauggarnitur 16 in den Abscheidebehälter des Vakuum-Saugfördergerätes 13.

## Entsorgungskreislauf/Entstaubungssystem

Um eine Staubaufwirbelung an den Strahlmittelübergabestellen zu verhindern, sind alle in dem Recyclingcontainer II als Staubemissionsquellen in Frage kommenden Anfallstellen (insbesondere die Vibrationssiebanlage 11) einschließlich der Vakuumerzeuger 8, 10, 14 über ein zentrales Absaugrohrleitungssystem mit dem Entstaubungsgerät 15 verbunden. Die Filterung der Abluft erfolgt über großdimensionierte Patronenfilterelemente 15.1. Die Abreinigung der Filterelemente geschieht kontinierlich durch Druckluftimpulse während des Betriebes. Der abgeschiedene Staub wird in einem unterhalb angeordneten Staubsammelbehälte 30 gesammelt. Das Nachströmen der Zuluft erfolgt über vier Gitterbänder 15.2, welche in den stirnseitigen Beladetüren des Recyclingcontainers II angeordnet sind.

## Entsorgungskreislauf/Wasserkreislauf

Das in der Wassersammelwanne 4 anfallende Wasser wird vor Einleitung in die Entwässerungsleitung 4.1 in das Kernkraftwerk einer doppelten Nutzung unterworfen. Zunächst wird dieses Wasser über eine Hochdruckpumpe 18 in einen Wasserstrahlventilator 26 gepresst und fliesst dann als Dampf-Wassergemisch in den oberen Wasserspeicher 4.2, von wo aus es über einen Überlauf in die darunter befindliche Wassersammelwanne 4 strömt. Durch das große Wasserreservoir in beiden Behältern wird eine zu starke Temperaturerhöhung als Folge des aus dem Trockner 7 abgesaugten Sampfes vermieden. Aus dem Überlauf der Wassersammelwanne 4 fliesst das temperierte Wasser über die Entwässerungsleitung 4.1. wieder zurück in das Kernkraftwerk. Zur Absicherung der Hochdruckwasserpumpe 18 gegen Trockenlaufen ist ein Minimum-Füllstandsgrenzmelder 4.3 eingesetzt.

## Druckluftversorgung

Die Druckluftversorgung erfolgt ausseits in einen Druckluftspeicher- und verteiler 23. Von hier aus erfolgt die Versorgung der elektropneumatischen Stellantriebe, Kugelvibratoren 7.2, Filterabreinigungssysteme etc. innerhalb des Recyclingcontainers 2.

## Schalt-, Steuerung- und Überwachungsgeräte

Für die Steuerung des automatischen Ablaufes zwischen Dekontaminationscontainer I und Recyclingcontainer II ist ein elektrischer Schalt- und Steuerschrank 19 eingebaut, in dem alle zum vollautomatischen Betrieb der Anlage notwendigen Schalt-, Steuer- und Überwachungsgeräte gegen Überfüllung und Fehlbedienung untergebracht sind. Die elektrische Versorgung wird über die Haupteinspeisung 19.1 sichergestellt. Die Temperatur- und Leistungsregelung des Trockners 7 erfolgt über den Schaltschrank 7 a.

## Patentansprüche

1. Verfahren zum Reinigen radioaktiv verseuchter Teile von Kernkraftwerksanlagen durch Abtragen von Oberflächenschichten, bei dem die zu reinigenden Teile mit einem ein körniges Schleifmittel enthaltenden Druckwasserstrahl bestrahlt werden und bei dem das abfliessende Gemisch aus Wasser, Schleifmittel und abgetragenen Oberflächenpartikeln in eine Wasserphase und eine Schlammphase getrennt wird, dadurch gekennzeichnet, daß die Schlammphase getrocknet und die Trockenmasse in Schleifmittel und Partikel mit unter der Körnung des Schleifmittels liegenden Durchmessern getrennt wird, daß das gereinigte Schleifmittel wieder in den Druckwasserstrahl eingespeist und die abgetrennten Partikel entsorgt werden.

2. Verfahren nach Anspruch 1, dadurch gekennzeichnet, daß dem Druckwasserstrahl Luft zugemischt wird.

3. Verfahren nach Anspruch 1 oder 2, dadurch gekennzeichnet, daß die Wasserphase verdampft wird.

4. Verfahren nach Anspruch 1 oder 2, dadurch gekennzeichnet, daß der beim Trocknen der Schlammphase entstehende Wasserdampf abgeleitet oder kondensiert und in die Wasserphase geführt wird.

5. Verfahren nach einem der vorhergehenden Ansprüche, dadurch gekennzeichnet, daß vor der Trennung des Wasser-Schleifmittel-Partikel-Gemisches das grobkörnigere Schleifmittel abgetrennt wird.

6. Verfahren nach einem der vorhergehenden Ansprüche, dadurch gekennzeichnet, daß das Gemisch durch Sedimentieren getrennt wird.

7. Verfahren nach einem der vorhergehenden Ansprüche, dadurch gekennzeichnet, daß die nach Trocknen der Schlammphase zurückbleibenden Feststoffe durch Sieben in Schleifmittel eventuell unterschiedlicher Körnung und zu entsorgende Partikel mit unter der Schliefmittelkörnung liegender Körnung getrennt werden.

8. Verfahren nach einem der vorhergehenden Ansprüche, dadurch gekennzeichnet, daß nur die aufgrund einer Grobtrennung gewonnenen Teilchen in ein wiederverwendbares Schleifmittel und zu entsorgende Partikel getrennt und der Schlamm mit unter der Körnung des Schleifmittels liegenden Partikeln entsorgt wird.

9. Vorrichtung zur Durchführung des Verfahrens nach einem der Ansprüche 1 bis 8, gekennzeichnet durch zwei voneinander getrennte geschlossene Kammern mit Türen und Versorgungsanschlüssen, von denen die eine den Behandlungsraum mit einer aus einem Siebrost bestehenden Arbeitsbühne und einer unter dieser angeordneten Auffangwanne und die andere die der Trennung und Reinigung dienenden Einrichtungen enthält.

10. Vorrichtung nach Anspruch 9, dadurch gekennzeichnet, daß die Kammern ein Edelstahlgehäuse besitzen.

11. Vorrichtung nach Anspruch 9 oder 10, dadurch gekennzeichnet, daß die Kammern die Abmessungen von ISO-NORM-Containern besitzen.

**Claims**

1. A process of cleaning parts of nuclear power plants which are contaminated with radioactive substances, by a removal of surface layers, wherein a jet of water under pressure, which contains a granular abrasive, is directed against the parts to be cleaned and the effluent consisting of a mixture of water, abrasive and removed surface particles is separated into a water phase and a sludge phase, characterized in that the sludge phase is dried and the dry material is seperated into abrasive and particles which are smaller in diameter than the abrasive, the purified abrasive is recycles into the jet of water under pressure and the separated particles are disposed of.

2. A process according to claim 1, characterized in that air is admixed to the jet of water under pressure.

3. A process according to claim 1 or 2, characterized in that the water phase is evaporated.

4. A process according to claim 1 or 2, characterized in that the water vapour produced during the drying of the sludge phase is conducted away or condensed and introduced into the water phase.

5. A process according to any of the preceding claims, characterized in that the more coarsely grained abrasive is separated before the separation of the mixture of water and abrasive particles.

6. A process according to any of the preceding claims, characterized in that the mixture is separated by sedimentation.

7. A process according to any of the preceding claims, characterized in that the solids remaining after the sludge phase has been dried are separated by sieving into abrasive, optionally into abrasives differing in particle size, and into particles which are to be disposed of and have a smaller particle size than the abrasive.

8. A process according to any of the preceding claims, characterized in that only those particles which have been recovered by a coarse separation are separated into a reusable abrasive and particles to be disposed of, and the sludge consisting of smaller particles than the abrasive is disposed of.

9. Apparatus for carrying out the process according to any of claims 1 to 8, characterized by two closed chambers, which are separated from each other and provided with doors and supply ports, wherein one of said chambers contains the treating space with a working platform consisting of a sieve grate and a collecting tub disposed under said platform, and the other of said chambers contains the means for separation and cleaning.

10. Apparatus according to claim 9, characterized in that the chambers have a special steel housing.

11. Apparatus according to claim 9 or 10, characterized in that the chambers have the dimensions of ISO-NORM containers.

**Revendications**

1. Procédé pour le nettoyage de parties d'installations d'usines nucléaires contaminées par la radioactivité au moyen de l'élimination de couches de surface, dans lequel les parties à nettoyer sont passées à un jet d'eau sous pression contenant un abrasif granulé et dans lequel le mélange s'écoulant, consistant en eau, abrasif et particules de surfaces enlevées, est séparé en phase aqueuse et en phase boueuse, caractérisé en ce que la phase boueuse est séchée et la matière sèche est séparée en abrasif et particules de diamètre inférieur à la granulation de l'abrasif, que l'abrasif nettoyé est réacheminé dans le jet d'eau sous pression et que les particules séparées sont évacuées.

2. Procédé selon la revendication 1, caractérisé en ce que l'air est ajouté au jet d'eau sous pression.

3. Procédé selon les revendications 1 ou 2, caractérisé en ce que la phase aqueuse est évaporée.

4. Procédé selon les revendications 1 ou 2, caractérisé en ce que la vapeur d'eau qui se forme pendant le séchage de la phase boueuse est dérivée ou condensée et acheminée à la phase aqueuse.

5. Procédé selon l'une des revendications précédentes, caractérisé en ce que l'abrasif à granulation plus grossière est séparé avant la séparation du mélange d'eau, d'abrasif et de particules.

6. Procédé selon l'une des revendications précédentes, caractérisé en ce que le mélange est séparé par sédimentation.

7. Procédé selon l'une des revendications précédentes, caractérisé en ce que les solides restant après le séchage de la phase boueuse sont tamisés en abrasif de granulations éventuellement différentes et que les particules à évacuer sont séparées, leur granulation étant inférieure à celle de l'abrasif.

8. Procédé selon l'une des revendications précédentes, caractérisé en ce que seules les particules obtenues à la suite d'une séparation grossière sont séparées en abrasif réutilisable et particules à évacuer et que la boue évacuée possède des particules plus petites que la granulation de l'abrasif.

9. Dispositif pour l'exécution du procédé selon l'une des revendications 1 à 8, caractérisé en ce qu'il possède deux chambres séparées l'une de l'autre avec des portes et des raccordements d'alimentation, dont une est la pièce de traitement qui comporte un pont de travail consistant en une grille de crible et en une cuve de captage disposée sous la grille, l'autre chambre contenant les installations servant à la séparation et au nettoyage.

10. Dispositif selon la revendication 9, caractérisé en ce que les chambres possèdent un bâti en acier inoxydable.

11. Dispositif selon les revendications 9 ou 10, caractérisé en ce que les chambres possèdent des dimensions de conteneurs selon les normes ISO.

0 158 743